(19) Europäisches Patentamt
European Patent Office
Office européen des brevets

(11) **EP 3 128 287 A1**

(12) **EUROPEAN PATENT APPLICATION**

(43) Date of publication:
08.02.2017 Bulletin 2017/06

(51) Int Cl.:
*G01B 5/008* *(2006.01)*  *G01B 5/04* *(2006.01)*

(21) Application number: **15306273.2**

(22) Date of filing: **06.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Renishaw plc**
**Gloucestershire GL12 8JR (GB)**

(72) Inventors:
• **Grzesiak, Jean-Louis**
**77100 Mareuil Lis Meaux (FR)**
• **Gonzalez, Louis**
**77230 Dammartin En Goële (FR)**

(74) Representative: **Delorme, Nicolas et al**
**Cabinet Germain & Maureau**
**BP 6153**
**69466 Lyon Cedex 06 (FR)**

(54) **METHOD OF MEASUREMENT OF A SLOT**

(57)    A method of measuring a slot using a contact probe having a stylus tip mounted on a positioning apparatus, comprising positioning the stylus tip such that it is in contact with the edges that define the mouth of the slot.

Fig. 3a

**Description**

This invention relates to a method of measurement, in particular a method of measuring a slot, for example using a probe mounted on a positioning apparatus. In particular, the invention relates to a technique for measuring the width and/or the position of one or more aspects of a slot (e.g. the position of the slot, and/or the position of one or more edges of the mouth of the slot).

The use of a contact probe having a stylus with a stylus tip for contacting an artefact to be measured is well known. The stylus is typically mounted on a positioning apparatus (such as a coordinate measurement machine "CMM") and is moved so as to bring the stylus tip into contact with the artefact. Contact between the stylus tip and the artefact is detected and the position of the stylus tip can be used to determine the point of contact.

Self-centring of a stylus tip into a feature such as a hole or slot is known in order to determine the position of a feature or the relative positions of features, e.g. for gauging purposes. Also, following a slot along its length with the stylus tip in contact with the side-walls is also known. However, currently, in order to measure the width of a slot with a contact probe mounted on a positioning apparatus, a stylus tip of sufficiently small diameter to fit within the slot is chosen, such that points on the side walls of the slot can be taken.

Likewise, in order to measure the closed-end of a slot, a stylus tip of sufficiently small diameter to fit within the slot is chosen, such that points on the end wall can be taken. The end corner can be determined from the point of intersection of two lines fitted to the measurements of planar end and top surfaces.

In other embodiments, an arc with an unknown (non-fixed) radius has been fitted to scanned measurement data to find an edge between two planes or between a plane and a cylinder for example.

As described herein, the invention involves bringing the stylus tip onto the slot such that it sits on either side of the mouth of the slot to be measured. Measurements concerning the slot (e.g. position and/or width) can then be determined from the location of the stylus tip. Accordingly, as described herein, the width and/or position of the edges of the mouth of the slot can be determined from a single stylus tip location.

According to a first aspect of the invention there is provided a method of measuring a slot using a contact probe having a stylus tip mounted on a positioning apparatus, comprising positioning the stylus tip such that it is in contact with the edges that define the mouth of the slot (i.e. in contact with the edges at the same time/simultaneously).

The solution of the present invention can be more efficient and less likely to cause damage to the probe than currently known methods. With current methods, locating a probe tip inside a slot and driving it into the walls of the slot can be difficult and error prone, as well as time-consuming. Matters can be made worse when the slot is narrow (e.g. slots having a width of 10mm or less, but in particular 1mm or less) which requires a very small stylus tip to be used which can be fragile and therefore even more prone to damage. Such narrow slots can be found in a wide variety of devices, systems and machines, such as for example aircraft engines and additive manufacturing machines (e.g. heat exchangers).

The method can comprise determining a slot measurement from the determined position of the stylus tip that is in contact with the edges that define the mouth of the slot. The measurement could relate to/comprise one or more of: the width of the slot, the position of the edges defining the slot, and/or the position of the slot in at least one dimension, e.g. the position of the slot's middle plane. As will be understood, the width of the slot could comprise the width of the mouth of the slot (e.g. the distance between the edges defining the mouth of the slot) and/or the width of the slot at a point inside the slot (e.g. the distance between the slot's side-walls). The method can comprise determining such information from the extent by which the stylus tip extends into the slot.

Accordingly, with the method of the invention, the width of the slot can be determined by positioning the stylus tip such that it is in contact with the edges that define the mouth of the slot. Accordingly, not only can the position of the slot be determined, but the width can be determined too. Accordingly, the method can comprise determining the width of the slot. This could be determined from the extent by which the stylus tip extends into the slot.

The slot could comprise a feature in the surface of an artefact. For example, the slot could comprise a trough, dip, slit, hole (through-hole or blind-hole), crack, groove, notch or the like in an artefact. Optionally, the slot comprises a gap between at least two adjacent artefacts. The slot could be substantially straight, but as will be understood this need not necessarily be the case, e.g. it could be curved. The slot could have constant dimensions along its length (e.g. a constant width), but this need not necessarily be the case. The slot could have been formed by electrical discharge machining (EDM). Such a process can provide a sharp edge which can be particularly suitable for being measured by the process of the invention. Optionally, the sharpness of the corner is not more than the roughness of the side planes of the slot. Optionally, the slot had been formed by an additive manufacturing process, e.g. a metal additive manufacturing process, such as a laser-sintering/melting process (e.g. via a layer-by-layer process). As will be understood, the slot could have been formed via other manufacturing techniques such as machining and/or casting.

The method can comprise measuring (e.g. the position of) the surface on at least one side, for example on either side, of the slot. Such measurement(s) can be useful in determining how far the stylus tip extends into the slot. As will be understood, rather than measuring the surface on at least one side of the slot, the position of the surface on at least one side of the slot can be assumed or inferred (e.g. from a fixturing/part-registration process). Optionally, the position of the surface on at least one side of the slot can be determined from a measurement of the surface on the other side of the slot. Accordingly, as will be understood, there are various ways in which the position of the surface on at least one side of the slot can be determined/known.

The method can comprise determining the position of the edge of the slot (e.g. the position of a closed end of the slot), by fitting to measurement data comprising the position of the stylus tip of the contact probe during its transition between being on the surface of the artefact adjacent the slot and against the edges of the mouth of the slot, an arc of given radius defined by the stylus tip radius. In this case, as explained in more detail below, the length and/or orientation of the arc can be determined from the extent by which the stylus tip extends into the slot when it is in a position in which it is in contact with the edges that define the mouth of the slot.

The stylus tip could have a regular or irregular shape. For example, the stylus tip could comprise a conical contact end/face. Optionally, the stylus tip has an at least partially spherical contact end/face. Optionally, the stylus tip is substantially spherical. As will be understood, the diameter of the at least partially spherical part of the stylus tip can be greater than the width of the slot's mouth.

The method can comprising scanning the contact probe across the slot (e.g. transverse to the slot). Optionally, said scan across the slot begins on the surface on a first side of the slot and ends on the surface on the opposite side of the slot. This could be such that at some point along the scan the stylus tip is in a position in which it is in contact with the edges that define the mouth of the slot. Optionally, the width of the slot (and/or the position of the edges of the mouth of the slot) is determined from such a scan across the slot (e.g. by identifying the height of the dip in the measurements obtained by said scan as the extent by which the stylus tip extends into the slot). Optionally, the position of the slot is determined from such a scan across the slot (e.g. by determining the location of the bottom of the dip in the measurements obtained by said scan). The method could comprise driving a contact probe (for example the same contact probe), based on said determined position, so as to position a stylus tip of the contact probe such that it is in contact with the edges that define the mouth of the slot.

Said scan across the slot can be repeated at at least one other position along the length/extent of the slot.

The method can comprise scanning the contact probe along the length/extent of the slot with the stylus tip in contact with the edges that define the mouth of the slot. For example, such a scan along the length could be at least between the positions at which previous scans across the slot had taken place. Optionally, the method could be configured to follow the slot, e.g. by using a known slot/groove following technique. The method can comprise determining a value representative of the minimum width of the slot along said length/extent of the slot.

The stylus tip could be spherical. However, as will be understood, this need not necessarily be the case, and could for example be part-spherical, conical, or other regular or irregular shape. In those embodiments in which the stylus tip is at least part-spherical (e.g. is spherical), preferably the ratio of the diameter of the at least spherical part of the stylus tip (e.g. the diameter of the spherical stylus tip) to the slot width (e.g. at least the nominal slot width) is not more than 6:1, more preferably not greater than 3:1, for example not greater than 2:1, for instance approximately 1.6:1 which has been found a good compromise between the measurement precision and the robustness of the scanning.

The probe can comprise a deflectable stylus (e.g. configured to deflect from a rest position). The probe can comprise what is commonly known as an analogue probe. As will be understood, an analogue probe is a probe that is configured to output a measurement of the extent of the deflection of the probe's stylus (e.g. in one, two or three orthogonal dimensions) (e.g. of the position of the stylus tip). An analogue probe could be configured to provide individual outputs for deflection in each dimension (and hence indicates the direction of deflection), and/or could be configured to provide an output representative of the extent of deflection without any indication of the direction of deflection (e.g. the output could be an amalgamation/aggregate of the deflection measured in different directions).

As will be understood, analogue probes are in contrast to touch-trigger probes which only output an indication that the stylus has deflected.

As will be understood an analogue probe can provide its measurement output in analogue or digital form. Accordingly, as will be understood, the term analogue is used to indicate the mode of operation of the probe as opposed to the type of output provided. Analogue probes are also commonly known as scanning probe. The measurement of the extent of deflection can be with respect to the body of the probe from which the stylus extends. The probe body could comprise one or more mount members for mounting the probe to a part of a positioning apparatus (e.g. to a head, such an as articulated head) of a coordinate positioning apparatus.

The probe could comprise a passive probe. A passive probe can comprise a deflectable stylus, which is biased towards a rest position via one or more resilient members (e.g. one or more springs). However, as will be understood, this need not necessarily be the case and could for example be an active probe, in which the deflectable stylus is actively driven to control the contact force between the stylus and the artefact during measurement, e.g. via one or more motors.

Furthermore, as will be understood, the probe does not even need to be an analogue probe, or even a probe with a deflectable stylus. For instance, the probe could be a rigid probe, such as a hard probe or for example a vibrating stylus probe such as that described in WO2007/129071 or WO2007/129075.

As mentioned above, the invention is particularly useful when the slot is narrow, e.g. having a width of not more than 10mm, for instance not more than 5mm, optionally not more than 1mm, in particular not more than 0.6mm, for example not more than 0.3mm.

The probe can mounted on a positioning apparatus such that it can be moved in at least one linear degree of freedom, more preferably at least two linear degrees of freedom, especially preferably at least three linear degrees of freedom. Optionally, the linear degrees of freedom are perpendicular to each other. Optionally, the probe is mounted on a positioning apparatus such that it can be rotated through at least one rotational degree of freedom, optionally rotated through at least two rotational degrees of freedom, for example can be rotated through at least three rotational degrees of freedom. Optionally, the at least two and at least three rotational degrees of freedom are about two (or three) substantially perpendicular axes. The rotational degrees of freedom can be provided by an articulated head on which the probe unit is mounted. Measurement devices which are moveable in three linear degrees of freedom and two rotational degrees of freedom are commonly referred to in the metrological industry as "five-axis" measurement devices. However, as will be understood, the invention is not limited to such systems and can be used with systems that facilitate movement through much more degrees of freedom, for instance through three, four or more rotational degrees of freedom.

The positioning apparatus can comprise a coordinate positioning apparatus. The coordinate positioning apparatus could comprise a Cartesian coordinate positioning apparatus or a non-Cartesian coordinate positioning apparatus. The coordinate positioning apparatus can be a computer controlled coordinate positioning apparatus, for example a computer numerically controlled (CNC) coordinate positioning apparatus. Suitable coordinate positioning apparatus include coordinate measuring machines (CMM) and machine tools. Suitable coordinate positioning apparatus include, gantry, bridge, hexapod, parallel-kinematic machines, arm-type measurement apparatus, as well as robot arms. As will be understood, the positioning apparatus could be automatically driven, or manually driven (e.g. via an input device such as a joystick, or by manual manipulation (e.g. pushing/pulling) of the movable parts of the positioning apparatus, such as the quill or the end of an arm).

The method can comprise an analyser device configured to determine a slot measurement from the determined position of the stylus tip that is in contact with the edges that define the mouth of the slot. The method can comprise an analyser device configured to determine such information from the extent by which the stylus tip extends into the slot.

As will be understood, any or all of the steps of the above or below described methods can be computer-implemented. For example, determining a slot measurement from the determined position of the stylus tip that is in contact with the edges that define the mouth of the slot could be computer implemented. Optionally, the controlling of the positioning apparatus so as to position the stylus such that it is in contact with the edges that define the mouth of the slot, could be computer implemented.

Accordingly, there is described a method of measuring a slot, comprising determining the width of the slot, and/or the position of at least one of the edges defining the slot, from measurement data concerning the extent by which the stylus tip of a contact probe mounted on a positioning apparatus extends into the slot when it is in a position in which it is in contact with the edges that define the mouth of the slot. The measurement data can comprise scanned measurement data. For example, the measurement data could have been obtained from a scan along the length of the slot. The measurement data can comprise data concerning position of the surface on at least one side of the slot. Optionally, the measurement data could have been obtained from a scan between two positions (e.g. one in which the stylus tip is positioned against the edges defining the mouth of the slot and the other being on the surface next to the slot). The method can comprise receiving said measurement data. The method can comprise obtaining said measurement data, e.g. the method can comprise controlling a contact probe comprising a stylus tip so as to obtain said measurement data.

According to a second aspect of the invention there is provided a method of determining the position of the edge of a slot, comprising fitting to measurement data comprising the position of a stylus tip of a contact probe during its transition between being on the surface of the artefact adjacent the slot and against the edges of the mouth of the slot, an arc of given radius defined by the stylus tip radius (e.g. equal to the stylus tip radius).

The measurement data can additionally comprise the position of the stylus tip taken at different points along a portion of the surface adjacent the slot. The measurement data can additionally comprise the position of the stylus tip taken at different points along the extent of the slot when the stylus tip is located against the edges of the slot. The measurement data can comprise scanned measurement data. For example, the measurement data could have been obtained by from a scan between two positions (e.g. one in which the stylus tip is positioned against the edges defining the mouth of the slot and the other being on the surface next to the slot). As will be understood, the scan can be obtained in either direction, but preferably it is obtained by moving the stylus tip from a location in which the stylus tip is positioned on the surface adjacent the slot to a location in which the stylus tip is positioned against the edges defining the mouth of the slot (i.e. in a direction that proceeds towards/into the slot rather than out of the slot).

The length and orientation of the arc can be determined from said measurement data. In other words, the "clock" (or "o'clock") positions of the ends of the arc can be determined from the measurement data. For example, the position of an end of the arc could be determined from the average height position of the stylus tip on one of the sides of the transition stage. For instance, the "clock" (or "o'clock") position of a first end of the slot can be chosen so as that the measurement data obtained regarding the surface adjacent the slot is tangential to the arc (at least at their boundary/interface). For instance, the "clock" (or "o'clock") position of a first end of the arc can be determined to be the position at which a line fitted to the measurement data obtained regarding the surface adjacent the slot, is tangential to the arc (at least at their boundary/interface). The "clock" (or "o'clock") position of the slot-end of the arc can then be determined from the (e.g. the average of the) extent by which the stylus tip extends into the slot. In particular, the "clock" (or "o'clock") position of the slot-end of the arc can then be determined to be the "clock" (or "o'clock") position at which the arc intersects the measurement(s) obtained by the contact probe when its stylus tip was positioned against the edges defining the mouth of the slot. For instance, the "clock" (or "o'clock") position of the slot-end of the arc can then be determined to be the position at which the arc intersects a line fitted to the measurements obtained by the contact probe (e.g. during a scan along the mouth of the slot).

Optionally, the extents of the measurements obtained along the mouth of the slot, and the along the surface adjacent the slot are substantially parallel (e.g. a line fitted to the measurement data obtained regarding the surface adjacent the slot is substantially parallel to a line fitted to the measurements obtained by the contact probe during a scan along the mouth of the slot). Accordingly, optionally, at least nominally, the slot and the surface adjacent to the slot are such that measurements obtained along them in accordance with the methods described herein should extent substantially parallel to each other.

The method can comprising fitting to said measurement data a shape comprising said arc and a portion that is tangential to said arc (at least at its boundary with the arc). For example, when the arc comprises a two-dimensional arc (as opposed to a three-dimensional arc, e.g. an arc having depth) the portion can comprise a line. For example, when the arc comprises a three-dimensional arc, the portion could comprise a 3-dimensional form, for example a plane. As will be understood, said portion can comprise a form configured to match/represent (e.g. by parallel to) the surface adjacent the slot.

Accordingly, as described, the method can comprise determining at least the arc to be fitted (and optionally determining a more complex/compound shape) to the measurement data from measurement data concerning the slot and the surface adjacent the slot (e.g. from the measurement data itself).

The method can be used to determine the position of the edge of the closed end of a slot. Optionally, the method can be used to determine the position of the edge of a side-wall of a slot.

Accordingly, there is described, a method of determining the position of (e.g. the end of, for example the closed-end of) a slot, comprising fitting a shape at least notionally comprising a first portion in the form of an arc of given radius and a second portion configured to tangentially extend from said arc and to match the expected form of the surface adjacent the end of the slot, to measurements obtained from a scan by a contact probe having a stylus tip, in which the centrepoint of said arc is taken as the position of the end of the slot. The given radius can comprise the radius of the stylus tip.

The stylus tip can comprise an at least partially spherical contact face/end, e.g. could be substantially spherical. Said scan can extend between a location in which the stylus tip is positioned against the mouth of the slot and a location in which the stylus tip is positioned on the surface adjacent the slot.

Accordingly, there is described, a method of determining the end position of a slot, comprising fitting an arc of given radius to measurement obtained from a scan of the corner of the end of the slot, such that measurement data obtained during the measurement of the surface adjacent the end of the slot is tangential to the arc.

As will be understood, the measurement data could have been obtained previously. The method can comprises receiving said measurement data. Optionally, the method comprises obtaining said measurement data. Accordingly, the method can comprise controlling a contact probe comprising a stylus tip so as to obtain said measurement data.

According to a third aspect of the invention there is provided a measurement apparatus comprising, a contact probe having a stylus tip, and at least one processor device configured to execute any of the above described methods. For example, configured so as to determine a slot measurement (e.g. the width of the slot and/or the position of at least one edge of the mouth of the slot) from the position of the contact probe's stylus tip that was obtained when the stylus tip was in contact with the edges that define the mouth of the slot. Optionally, configured so as to fit to measurement data comprising the position of a stylus tip of a contact probe during its transition between being on the surface of the artefact adjacent the slot and against the edges of the mouth of the slot, an arc of given radius defined by the stylus tip radius (e.g. equal to the stylus tip radius).

According to a fourth aspect of the invention there is provided at least one processor device configured to execute any of the above described methods. For example, configured so as to determine, from the position of a contact probe's stylus tip at the point the stylus tip was in contact with the edges that define the mouth of a slot, a measurement concerning the slot (e.g. the width of the slot and/or the position of at least one edge of the mouth of the slot). Optionally, configured so as to fit to measurement data comprising the position of a stylus tip of a contact probe during its transition between being on the surface of the artefact adjacent the slot and against the edges of the mouth of the slot, an arc of given radius defined by the stylus tip radius (e.g. equal to the stylus tip radius).

According to a fifth aspect of the invention there is provided computer program code comprising instructions which when executed (e.g. by a processor device) cause the processor device to execute any of the above described methods. For example, there is provided computer program code comprising instruction which when executed (e.g. by a processor device) causes the processor device to determine, from the position of a contact probe's stylus tip at the point the stylus tip was in contact with the edges that define the mouth of a slot, a measurement concerning the slot (e.g. the width and/or position of at least one edge of the mouth of the slot). Optionally, there is provided computer program code comprising instruction which when executed (e.g. by a processor device) causes the processor device to fit to measurement data comprising the position of a stylus tip of a contact probe during its transition between being on the surface of the artefact adjacent the slot and against the edges of the mouth of the slot, an arc of given radius defined by the stylus tip radius (e.g. equal to the stylus tip radius).

According to a sixth aspect of the invention there is provided a computer readable medium, bearing computer program code as described above.

As will be understood, features described above in connection with any one of the above mentioned aspects of the invention are also applicable to the other aspects of the invention.

Embodiments of the invention will now be described, by way of example only, with reference to the following drawings, in which:

Figure 1 illustrates a CMM comprising an articulated head on which an inspection device for measuring a workpiece is mounted;

Figure 2 illustrates an example artefact having a slot to be measured in accordance with the method of the invention;

Figures 3a and 3b illustrates the probe tip in contact with the edges that define the mouth of the slot to be measured;

Figure 4 is a flow chart illustrating an example process in which the method of the invention can be used;

Figures 5 to 7 illustrate other example arrangements of slots that can be measured and different types of stylus tip that can be used in accordance with the invention;

Figures 8a to 8c illustrate the measurement of the end position of a slot; and

Figure 9 is a graph illustrating the noise amplification experienced for different ratios of slot width and stylus tip diameter.

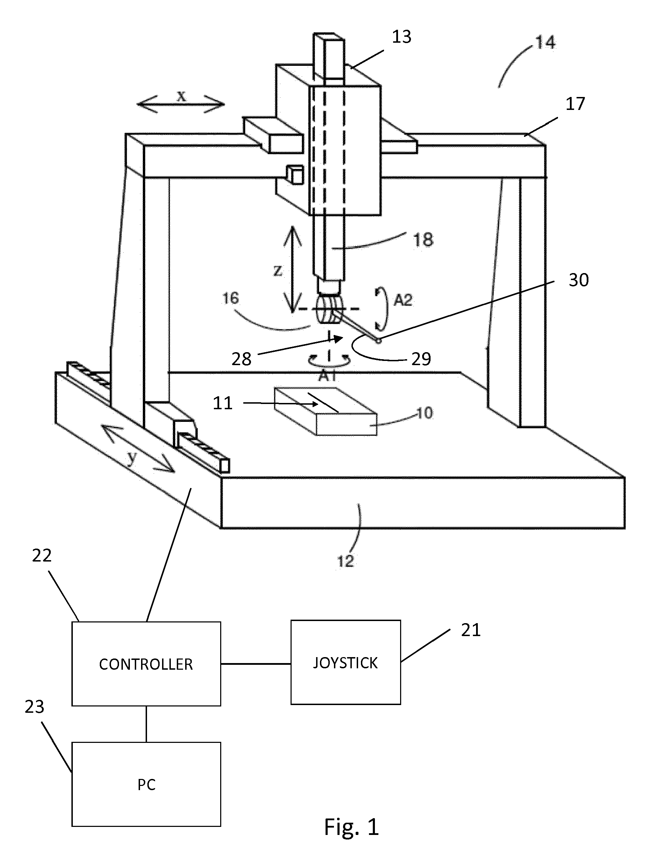

Fig 1 illustrates a motorised articulated scanning (continuous) head 16 mounted on a coordinate measuring machine (CMM) 14. An artefact 10 to be measured is placed on a table 12 of the CMM 14 and the articulated scanning head 16 is mounted on a quill 18 of the CMM 14. The quill 18 is mounted on a carriage 13 which in turn is mounted on a bridge 17 which in turn is mounted on the table 12. The bridge 17 is driveable in the X direction relative to the table by motors in a known manner, the carriage 13 is driveable in the Y direction relative to the bridge 17 (and hence the table 12) by motors in a known manner, and the quill 18 is driveable in the Z direction relative to the carriage 13 (and hence the bridge 17 and table 12) by motors in a known manner. A probe 28 with a stylus 29 having a workpiece contacting tip 30 (also known as a probe tip, or a stylus tip) is mounted onto the articulated scanning head 16. In the embodiment described, the articulated head comprises two rotational axes A1 and A2, arranged orthogonal to each other. In the embodiment described, the A1 axis of the articulated scanning head 16 is nominally parallel to the CMM Z axis (which is along the quill 18). The A2 axis of the articulated scanning head 16 is orthogonal to its A1 axis. The arrangement is such that motors of the articulated scanning head 16 can position the workpiece contacting tip 30 angularly about the axes A1 or A2 and the motors of the CMM 14 can position the articulated scanning head 16 linearly anywhere within the three-dimensional coordinate framework of the CMM. Any combination of such motions can be controlled so as to bring the stylus tip 30 into a predetermined relationship with the surface being measured.

Linear encoders (also known as linear position transducers) (not shown) are provided on the CMM 14 for measuring linear displacement of the articulated scanning head 16 and angular/rotary encoders (also known as angular position transducers) (not shown) are provided in the articulated scanning head 16 for measuring angular displacement of the stylus about the respective axes A1 and A2.

As will be understood, although the described embodiment comprises a bridge-type Cartesian coordinate measuring machine, this need not necessarily be the case. For example, the invention could be used with measurement data obtained from other types of Cartesian or non-Cartesian coordinate measuring machines could be used, e.g. a parallel-kinematic positioning machine, with or without a rotational mechanism (such as an articulated head).

In this embodiment, the probe 28 has probe body 31 which is detachably mounted to the CMM 14 (in this case via an articulated scanning head 16). The probe 28 also comprises a deflectable stylus 29 which extends from the probe body 31. A stylus tip 30 is located at the end of the deflectable stylus, distal to the probe body 31. Transducers in the probe 28 (e.g. in the probe body 31) measure the amount of stylus deflection (e.g. to provide a measure of the position of the stylus tip relative to the probe body) which can be combined with measurement of the position of the probe determined from the CMM's position encoders to provide a measurement of the position of the stylus tip within the CMM's measurement volume. Accordingly, the probe 28 is what is commonly known as an analogue (or scanning) probe. Furthermore, the stylus and stylus tip are biased towards a rest position via at least one resilient member (e.g. at least one spring). Accordingly, in this particular example the probe is what is commonly known as a passive analogue (scanning) probe. As will be understood, other types of probe may be used. For example, a rigid probe could be used. For instance, an articulated head could be operated to bias the rigid probe against the surface, e.g. in a constant torque mode about one axis (so as to push the probe into the slot) and free to pivot about the other as it moves along the surface. Likewise, instead of a passive analogue (scanning) probe, an active analogue (scanning) probe could be used.

The desired trajectory/course of motion of the probe 28 relative to the object 10 could, for example, be calculated by a host PC 23 and fed to a controller 22 associated with the CMM 14. Optionally, the trajectory/course of motion of the probe 28 relative to the object 10 could be controlled manually, e.g. via an operator manipulating a joystick 21. Motors (not shown) are provided in the CMM 14 and articulated probe head 16 to drive the probe 28 to the desired position/orientation under the control of the controller 22 which sends drive signals to the CMM 14 and articulated probe head 16. The positions and orientations of the various axes of the CMM 14 and the articulated probe head 16 are determined by transducers, e.g. position encoders, (not shown) and the positions are fed back to the controller 22. Likewise, the extent of deflection of the probe's stylus (i.e. the position of the stylus tip 30) is reported to the controller 22. The position, orientation, and/or deflection/stylus tip information can be used (e.g. by the PC 23 and/or any other suitable processor device) in order to obtain measurements about the artefact 10, in particular about the artefact's slot 11 as described in more detail below.

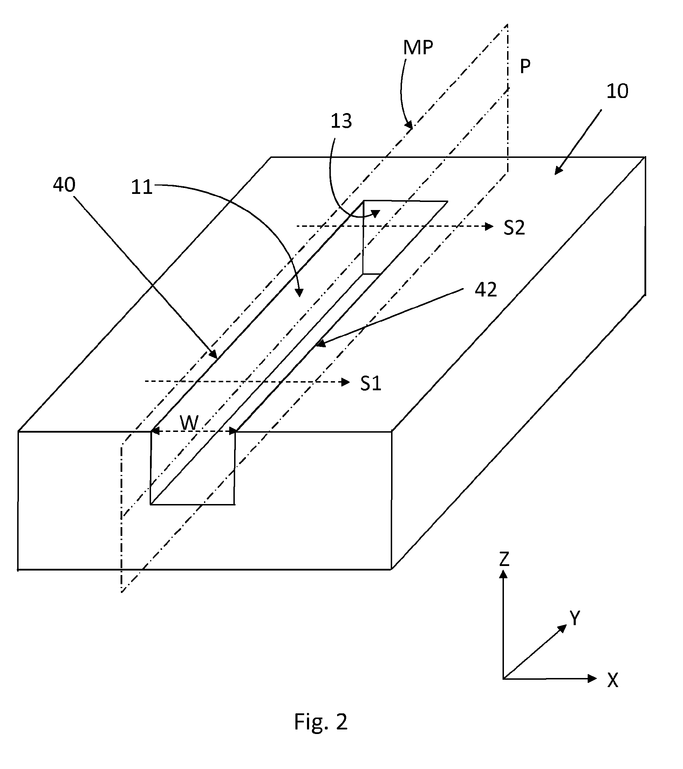

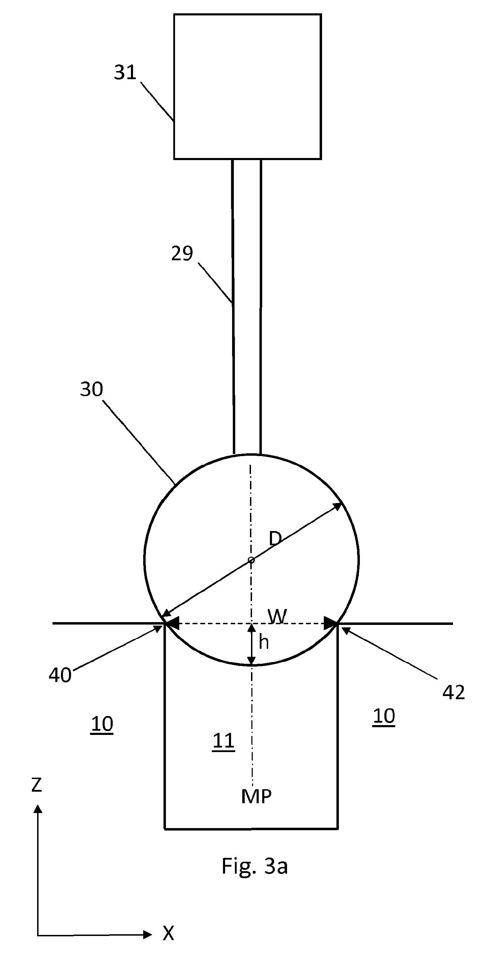

As schematically illustrated in Figure 1, the artefact 10 comprises a slot 11. Figure 2 illustrates the slot 11 in more detail. In the example shown the slot 11 is a straight slot, of uniform dimensions along its length, and is open at one end and closed at its other. However, as will be understood none of these need necessarily be the case. For example, the slot could be not straight (e.g. curved), could have varying dimensions (e.g. varying width) along its length, and could be open or closed at both of its ends. In the particular example shown it is measure the lateral position of a line P extending along middle of the slot (e.g. in X and/or Z), the width W of the mouth of the slot (or in other words the width W of the slot's elongate opening) and/or the position of the edges 40, 42 defining the mouth of the slot, and the location of its closed end 13. As will be understood, as well as or instead of determining the position of the line P, the middle plane MP of the slot (see Figure 3a) can be determined. In the embodiment described, the middle plane MP can be a plane extending perpendicular to the top/face surfaces of the artefact 10 at the edges 40, 42 and which passes through the middle of the slot 11. However, as will be understood, the method of the invention can be used to determine just one or a combination of these aspects of the slot, or another aspect of the slot.

With reference to Figure 3a, the slot 11 can be inspected so as to obtain these measurements by using a probe having a stylus 30 which is configured such that when it is pushed in toward the slot it will come into engagement with the edges 40, 42 that define the mouth of the slot 11. Accordingly, this is in contrast to traditional methods where a probe is chosen with an appropriately configured stylus tip which can reach into and contact the side walls of the slot 11. In the embodiment in Figure 3a, the diameter D of the spherical stylus tip 30 is sufficiently large such that it is greater than the width W to be measured. Accordingly, it is known that by moving the stylus tip 30 in towards the slot will cause, at some Z position, the stylus tip 30 to contact both edges 40, 42 which define the mouth of the slot 11. As will be understood, the stylus tip need not necessarily be perfectly centred on the slot 11 as it is brought into the slot, since the act of pushing the stylus tip 30 into the slot will cause the stylus tip 30 and stylus 29 to deflect and become self-centred.

The position of the stylus tip in a dimension parallel to a plane containing the edges 40, 42 defining the mouth of the slot, define the position of the mouth of the slot in that dimension. Accordingly, in this embodiment, the X position at which the stylus tip 30 engages both of the edges 40, 42 of the mouth of the slot can be used to determine the position of the mouth of slot in X.

The position of the stylus tip in a dimension perpendicular to a plane containing the edges 40, 42 defining the mouth of the slot, can be used to determine the width W of the mouth of the slot 11, and/or the position of the edges 40, 42 defining the mouth of the slot in said parallel to the plane, and/or the position of the mouth of the slot in said dimension that is perpendicular to said plane. Accordingly, in this embodiment, the Z position at which the stylus tip 30 engages both edges 40, 42 which define the mouth of the slot 11 can be used to determine the width W of the mouth of the slot 11, and/or the position of the edges 40, 42 defining the mouth of the slot, and/or the Z position of the mouth of the slot. In particular, the width W, the position of the edges 40, 42, and/or the Z position of the mouth of the slot 11 can determined from the extent by which the stylus tip 30 extends into the slot 11 (in other words, the extent by which the stylus tip 30 extends beyond the slot's mouth into slot 11, e.g. the extent by which the stylus tip 30 falls into the slot 11). As will be understood, for a given sized stylus tip, the wider the mouth of the slot, the more the stylus tip will extend into the slot. The amount by which the stylus tip extends into the slot can be determined, for example, by determining the position (e.g. centre point) of the stylus tip when it is placed against both edges defining the mouth of the slot. In particular, the amount by which the stylus tip extends into the slot can be determined, for example, by determining the position (e.g. centre point) of the stylus tip when it is placed against both edges defining the mouth of the slot, and the known position of the edges of the mouth defining the slot in said first dimension (i.e. in this embodiment as shown, in Z). For example, the width of the slot (and/or the Z position of the mouth of the slot) could be determined from the position of the stylus tip in a first dimension (i.e. in this embodiment as shown, in Z) and the known position of the edges of the mouth defining the slot in said first dimension (i.e. in this embodiment as shown, in Z).

The known position of the edges of the mouth defining the slot in said first dimension (i.e. in this embodiment as shown, in Z) can be known from measurement (e.g. of the top surface of the artefact) by the same or a different probe, during the same of a different measurement operation, and/or could be assumed (e.g. from a fixturing/part-registration process). Accordingly, the plane which contains the edges 40, 42 of the mouth of the slot 11 can be known from measurement by the same or a different probe, during the same of a different measurement operation, and/or could be assumed/inferred (e.g. from a fixturing/part-registration process).

As an example, the difference in the altitude (e.g. the Z position) between the surfaces either side of the slot and the stylus tip allows us to determine the width of the slot using the formula:

$$W = 2\sqrt{(D - h)h} \qquad (1)$$

Where "W" is the width of the mouth of the slot, "D" is the diameter of the stylus tip, and "h" is the extent by which the stylus tip 30 extends into the slot 11.

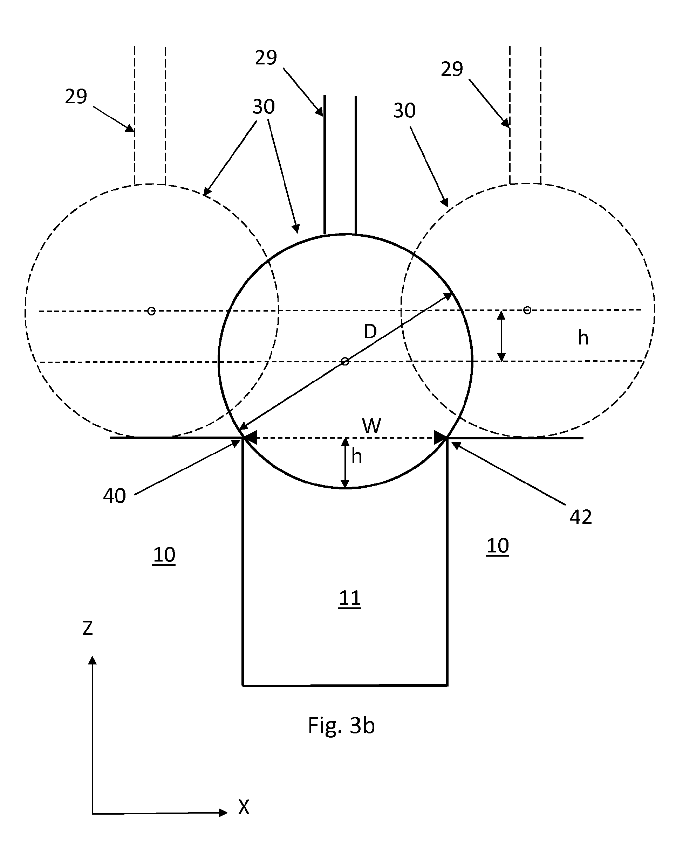

The extent h by which the stylus tip 30 extends into the slot 11 can be determined from the Z position of the surface of the artefact 10 either side of the slot 11, (in particular from the Z position of the edges 40, 42 defining the mouth of the slot) and the Z position of the stylus tip when it is located in the slot such that it contacts both edges 40, 42 which define the mouth of the slot 11. For example, as shown in Figure 3b, if the same probe 28 (having stylus tip 30) that is located against the edges 40, 42 of the mouth of the slot 11 (i.e. as shown) is also used to measure the surfaces either side of the slot 11, then h can be determined as the difference in the height (e.g. in Z) of the stylus tip between when it is in the slot and when it is on the side surfaces (e.g. the difference in Z of the stylus tip's centre point as schematically illustrated in Figure 3). Alternatively, as will be understood a different probe (or different stylus/stylus tip) could be used to measure the surfaces either side of the slot, and/or the position of the surfaces can have been predetermined (e.g. during a previous measurement operation) and/or assumed/inferred (e.g. from a fixturing/part-registration process).

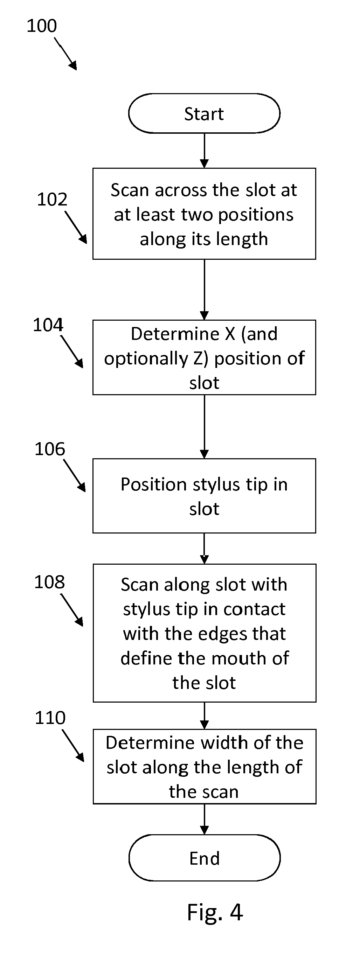

Figure 4 illustrates an example process 100 in which the method of the invention could be used. The process starts at step 102 at which the probe 28 is caused to scan across the slot 11 at at least two positions along the length of the slot 11. For example, the path of two such scans is schematically illustrated by arrows S1 and S2 in Figure 2. These example scans are shown as being taken in the same direction, but this need not necessarily be the case. Also, unlike as shown, it need not necessarily be the case that they are taken perpendicularly to the length of the slot.

As will be understood, the stylus tip 30 position will dip as it enters the slot. Its minimum height (its lowest Z value) will be when the stylus tip 30 contacts both sides of the mouth of the slot (i.e. in the position illustrated by the solid-line stylus tip 30 in Figure 3). This is when the stylus tip 30 is centred on the slot 11. Accordingly, the stylus tip 30 position data obtained during each scan S1, S2 can be analysed to determine the lateral position of (the middle of) the slot 11 in X at each position in Y along which the scan crossed the slot. Also, if desired, based on the known diameter D of the stylus tip 30 and the position of the surface either side of the slot 11, the height (in Z) of (the middle of) the slot and/or the slot's width W can be determined.

In the embodiment described, the width W is not determined at this stage. Rather, the lateral position of the mouth of the slot in X and its height Z are used at step 106 to guide the positioning of the probe 28 so as to put the stylus tip 30 into the slot 11, such that the stylus tip 30 contacts both sides of the mouth of the slot, at some point along the length of the slot. The determined lateral position of the slot in X and its height Z is also used to help determine how to move the stylus tip 30 along the length of the slot. Such movement occurs at step 108, and comprises scanning the stylus tip 30 along the slot 11, with the stylus tip 30 in contact with both edges which define the mouth of the slot. Optionally, the scan along the slot takes place between points at which the transverse scans S1 and S2 crossed the slot, either for a partial extent along the length of the slot between these points, or for the entire length between these points. As will be understood, the stylus tip 30 might only be in contact with both sides of the mouth of the slot for part of the scan, but as will be understood the method could be configured such that it stylus tip 30 is in contact with both sides of the mouth of the slot for most, and optionally all, of the scan (e.g. all the way between the points at which the transverse scans S1, S2 crossed the slot).

At step 110, the width of the slot 11 at any or for a plurality of points along the length of the slot 11 can be determined using the method described above in connection with Figure 3. In summary, the Z position of the stylus tip at any position along the length of the slot (in Y) can be used to determine the slot's width at that position.

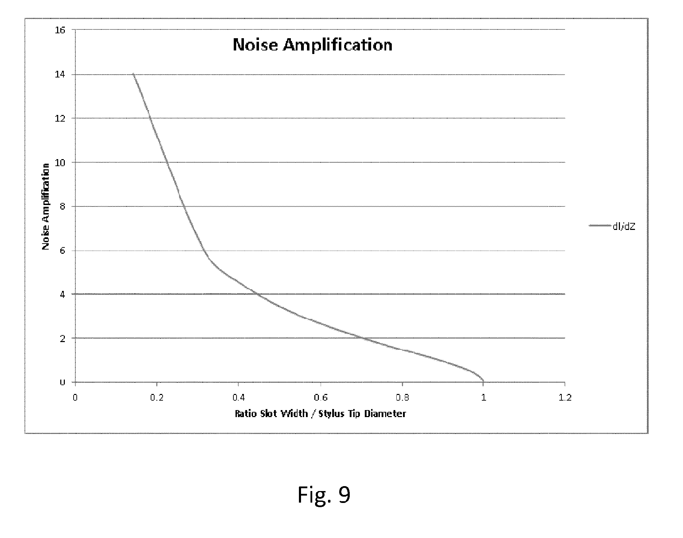

As will be understood, the larger the ratio of the stylus tip diameter D to the width W of the slot, the smaller the amount by which the stylus will extend into the slot (and so the smaller the difference in height position of the stylus between it being in the slot and on the side surface, e.g. the smaller the dip in a transverse scan), and hence the greater the uncertainty of the method for measuring slot. Accordingly, it can be preferred that the ratio of the stylus tip diameter D to the width W of the slot is not more than 3:1, in particular not more than 2:1, for example is approximately 1.6:1. Indeed, as illustrated by the graph in Figure 9, the noise amplification rises more quickly/steeply when the ratio of the stylus tip diameter D to width W of the slot is greater than 3:1 (i.e. 0.33 in the graph).

The technique of scanning along the length of the bore can be particularly advantageous over taking just one or a few points along the length of the slot, since any surface roughness can be averaged out. For example, the invention has been found to be particularly useful when the slot is made using electrical discharge machining (EDM) which is typically used to make very narrow slots (e.g. 0.5mm wide) and which results in the side walls being relatively rough compared to other manufacturing techniques (e.g. having a total roughness of about 30μm). EDM also results in sharp edges being formed at the mouth of the slot. In some applications it can be desirable to determine the minimum width of the slot. Accordingly, when the width is not uniform (e.g. due to surface roughness) then a value representative of the minimum width of the slot along said length/extent of the slot can be determined. This could for example be determined by offsetting the average width determined from the scan along the length of the slot, based on the level of noise measured during said scan. The statistical analysis of the values of the extent by which the stylus tip extends in the slot provides us with the standard deviation of the extent population. The average extents ($h_{average}$) can then be corrected by twice the standard deviation ($\sigma$) in order to output an extent value that represents statistically ($h_s$) the maximum material width of the slot:

$$h_s = h_{average} - 2.\sigma \qquad (2)$$

This can express a maximum material boundary without being sensitive to any measurement spike.

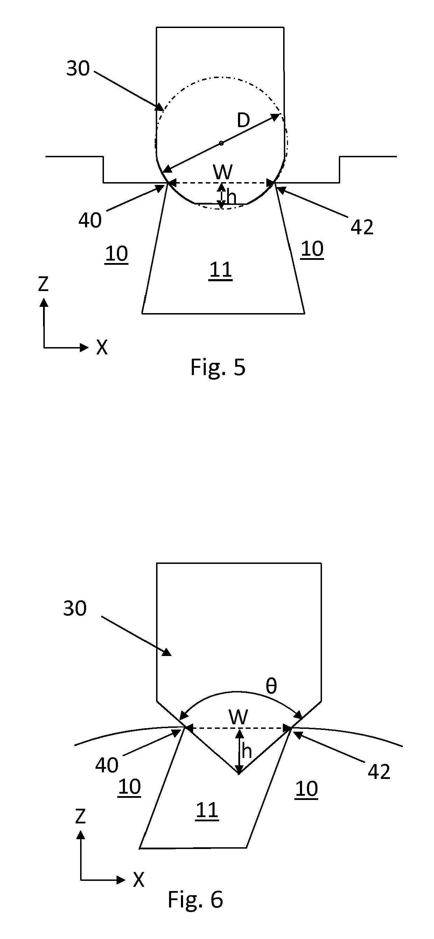

Figures 5, 6 and 7 illustrate other example ways of implementing the invention. As illustrated in Figure 5, the stylus tip need not necessarily be spherical, but could be partially spherical. As shown, the stylus tip 30 has a flat end face and a curved face (which conforms to a spherical form as illustrated by the dot-dashed line) for contacting the edges of the mouth of the slot 11'. If necessary, the top plane of the artefact in which the slot is formed could be for example measured width a different probe so that the extent h by which the stylus tip extends into the slot can be determined. Also, as shown the slot 11 to be inspected is itself part of a wider slot, and has non-parallel side-walls that extend non-perpendicularly to the surface in which the slot is formed.

Figure 6 illustrates that the stylus tip does not even need to be at least partially spherical. Rather, the stylus tip could be conical. The relationship between the width and the extent h becomes linear to the sin of the cone angle, as illustrated in the below formula:

$$2h \times sin(\theta/2) = W \qquad (3)$$

Also, as illustrated, the slot 11 can be slanted with respect to the surface in which the slot is formed. Furthermore, the surface on one or both sides of the slot need not be flat/planar, but could be curved for example.

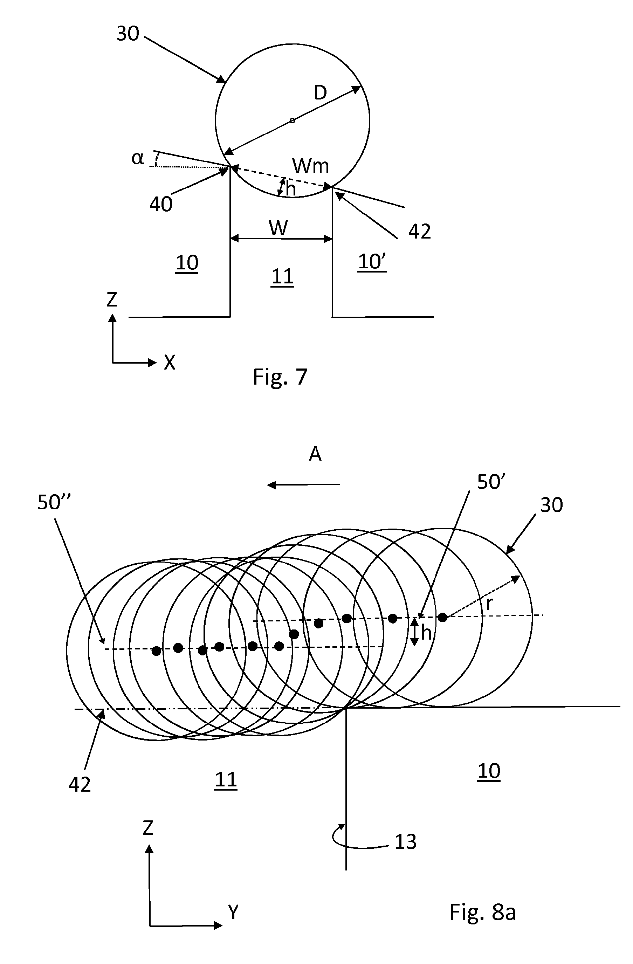

Figure 7 illustrates that the surface either side of the slot do not need to be orthogonal to the slot. In this case, the measured width Wm is determined from h, the extent by which the stylus tip 30 extends into the slot 11, measured orthogonal to the top face of the slot. The width W of the slot is determined from the angle between the slot and the top plane, and the extent by which the stylus extends into the slot.

$$Wm \times cos(\alpha) = W \qquad (4)$$

Also, as illustrated by Figure 7, the slot 11 could be formed by two different adjacent artefacts 10, 10' (as opposed to being a trough in the surface of one artefact 10).

Figures 8a to 8c illustrate how the position of the closed end 13 of the slot can be determined. A currently known technique involves inserting a stylus tip of a probe into the slot (e.g. beyond the mouth of the slot) and taking measurements on the face of the end surface 13. In contrast, the method taught here involves using measurement data that has been obtained from a scan between two positions (one in which the stylus tip is positioned against the edges defining the mouth of the slot and the other being on the surface next to the slot). For example, as illustrated by Figure 8a, the process can involve scanning along the top surface of the artefact 10 toward the slot 11 in the direction illustrated by arrow A. When the stylus tip 30 reaches the slot's end 13, it begins to fall into the slot until it contacts both sides of the mouth of the slot 11. As illustrated, the stylus tip 30 falls down in an arc-shaped motion when it enters the slot 11. As will be understood, the measurements could be obtained by scanning in the opposite direction (i.e. beginning with the stylus tip against the slot, scanning toward the end of the slot with the stylus tip lifting up and over the corner in an arc-shaped motion so as to then scan along the top surface). The action of the stylus tip falling into or rising out of the mouth of the slot occurs during what is referred to as a transition stage (i.e. in which the stylus tip is in transition between being on the surface of the artefact adjacent the slot and against the edges of the mouth of the slot). Figure 8a schematically illustrates the outline as well as the measured centre point of the stylus tip 30 at various positions along the scan.

The method described herein comprises determining the position of the closed end of a slot from scanned measurement data obtained during at least the transition stage of a stylus tip as it approaches (e.g. falls into) or comes out of (e.g. rises out of) engagement with mouth of the slot. The process comprises fitting (e.g. in a least squares manner) an arc of given radius to the measurement data. The radius can be predetermined by the radius of the stylus tip (for example, the arc radius = the stylus tip radius). Other properties of the arc (e.g. length and/or orientation) could also be predetermined, assumed or for example derived from other measurement data (e.g. see below for more details). In any case, once fitted, the position of the centre of the arc defines the position of the corner of the closed end of the slot.

In the particular embodiment described and shown in Figure 8a, the scan comprises measurement data obtained before, during and after the transition stage. The measurement data can be used to determine properties of the arc to be fitted to the measurement. For example, as mentioned above, the radius of the arc can be predetermined by the radius of the stylus tip (for example, the arc radius = the stylus tip radius), and the length and the orientation of the arc (in other words the "clock positions" or "o'clock positions" of the ends of the arc) can be determined from the measurement data obtained before and after the transition stage. For example, the length and orientation of the arc (in other words the "clock positions" of the ends of the arc) can be determined to ensure that the measurement data obtained on the surface adjacent the slot is tangential to the arc (at least at the boundary/interface with the arc) (e.g. such that a line fitted to said measurements is tangential to the arc), and such that the arc does not cross beyond the measurements obtained along the length of the slot; rather, it ends at the point of intersection with the measurements obtained along the length of the mouth of the slot (e.g. it ends at the point of intersection with a line fitted to said measurements along the length of the mouth of the slot). As mentioned above, the measurements obtained along the length of the slot comprise measurements obtained when the stylus tip is in a position in which it is in contact with the edges that define the mouth of the slot. Accordingly, the length and orientation of the arc (in other words the "clock positions" or "o'clock positions" of the ends of the arc) can be determined from the extent by which the stylus tip extends into the slot when it is in a position in which it is in contact with the edges that define the mouth of the slot.

For instance, as in the embodiment described and shown in Figure 8a, a first line 50' could be fitted (e.g. in a least squares manner) to the measurements obtained along the surface of the artefact 10 adjacent the slot, and a second line 50" could be fitted to the measurements obtained whilst the stylus tip was biased against the mouth of the slot (accordingly, this can require identifying, or making an assumption about, which measurements were obtained along the surface of the artefact 10 adjacent the slot, and which measurements were obtained whilst the stylus tip was biased against the mouth of the slot). The extent 'h' by which the stylus extends into the slot can be used to determine at least the "clock position" or "o'clock position" of at least one end of the arc. The "clock position" or "o'clock position" of the other end could be determined so as to ensure that the first line 50' is tangential to the arc (at least at is interface/boundary with the arc).

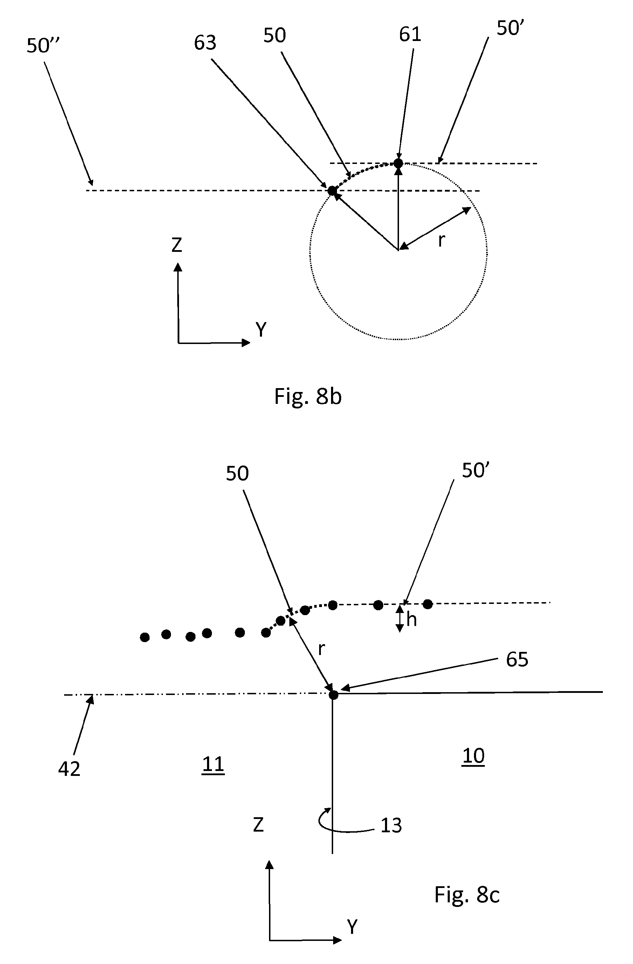

The determination of the clock (or o'clock) positions for the embodiment described is schematically illustrated in Figure 8b, whereby the first clock position 61 is identified as being the point at which an arc having a radius "r" equal to the stylus tip radius (D/2) is tangential to the measurement data obtained on the surface adjacent the slot (e.g. to the line 50' fitted to the measurement data obtained on the surface adjacent the slot), and whereby the second clock position 63 is identified as being the point at which said arc intersects the measurement data obtained along the length of the mouth of the slot (e.g. intersects the line 50" fitted to the measurement data obtained along the length of the mouth of slot). As will be understood, the lateral position of the determined arc 50 need not be determined at this stage, since this is then determined by the fitting stage (described below).

Once the arc properties, length and clock positions, have been determined, the arc can then be fitted (e.g. in a least squares manner) to the measurement data. Just the arc 50 could be fitted. Optionally, a more complex (e.g. a compound) shape which for example, and as illustrated in Figure 8c, (at least notionally) can comprise two or more portions, could be fitted to the measurement data. For example, a shape comprising at least a first portion comprising an arc 50 having a given radius and a second portion having a form which is tangential to the arc 50 (at least at is boundary/interface) and which matches (e.g. is parallel to) the surface of the artefact adjacent the slot (e.g. in this case a straight line 50') could be fitted to the stylus-tip measurement data. After fitting, the centre point 65 of the arc 50 defines the position of the corner of the slots' closed end.

Accordingly, in summary, such a shape could be derived by fitting a first shape (e.g. line 50') having a form parallel to the surface adjacent the slot and a second shape (e.g. line 50')' having a form parallel to the expected slot measurements to the corresponding parts of the measurement data. The "clock" positions of the arc (e.g. arc 50) can then be determined by finding the clock positions which results in the first shape being tangential to the arc and results in the arc terminating at its point of intersection with the second shape. The arc and first shape (and optionally the second shape if desired) can then be fitted (for instance, in a least squares manner) to the measurement data (e.g. by notionally sliding the arc and first shape back and forth along the extent of the measurement data). Optionally, the first and second shapes are parallel to each other.

Such a process has been found to provide a particularly good determination of the corner the position of the corner between the end surface 13 and the top surface of the artefact 10 (and hence the position of the end surface 13) even though only a very small amount of information about the corner is measured, and no measurements on the actual end surface 13 are obtained. The use of a portion representing the surface adjacent the slot (e.g. in this embodiment a line) that is tangential to the arc at least at their interface has been found to improve the fit of the arc to the measurement data, e.g. especially when during the process of obtaining the measurement data the stylus tip "bumped" over the edge of the slot thereby introducing erroneous data.

As will be understood, the measurement data used to define the top surface (e.g. line 50') could be obtained from a different measurement process and/or could be known from an entirely separate measurement process and/or assumed (e.g. from fixturing).

The embodiment of Figure 8 involves finding the position of the closed end of the slot. As will be understood, the same process could be used to find the corner position of one or both of the sides of the mouth of the slot. For example, at least one arc could be fitted to the data obtained during the transverse scan S1, S2. In this case there is less data available to determine the position of the end of the arc that is distal to the top surface of the artefact (i.e. the slot-end of the arc), but the end position can still be determined based on the extent by which the stylus tip extended (e.g. dipped) into the slot.

In the described embodiment, the coordinate positioning machine is a serial CMM (i.e. in which the three linear degrees of freedom is provided by three independent, orthogonal axes of motion, arranged in series). However, as will be understood, the invention can also be used to control the movement of other types of coordinate positioning machines, such as parallel CMMs, robot arms or the like. The invention can also be used with not just dedicated CMMs, but also with other types of coordinate positioning machines such as machine tools. Furthermore, as will be understood, the invention is also suitable for use with Cartesian and non-Cartesian positioning machines, for example the Equator™ machine available from Renishaw plc, and for example such as polar and spherical coordinate positioning machines.

**Claims**

1.   A method of measuring a slot using a contact probe having a stylus tip mounted on a positioning apparatus, comprising determining the width of the slot, and/or the position of at least one of the edges defining the slot, from the extent by which the stylus tip extends into the slot when it is in a position in which it is in contact with the edges that define the mouth of the slot.

2.   A method as claimed in claim 1, comprising measuring the position of the surface on at least one side of the slot.

3.   A method as claimed in claim 1 or 2, in which the stylus tip has an at least partially spherical contact end, having a diameter greater than the width of the slot's mouth.

4.   A method as claimed in any preceding claim comprising scanning the contact probe across the slot such that at some point along the scan the stylus tip is in a position in which it is in contact with the edges that define the mouth of the slot.

5.   A method as claimed in claim 4, in which said scan begins on the surface on a first side of the slot and ends on the surface on the opposite side of the slot.

6.   A method as claimed in claim 4 or 5, comprising repeating said scan across the slot at at least one other position along the length of the slot.

7.   A method as claimed in any preceding claim, comprising scanning the contact probe along the length of the slot with the stylus tip in contact with the edges that define the mouth of the slot.

8. A method as claimed in any preceding claim, in which the width of the slot is not more than 0.6mm.

9. A method as claimed in any preceding claim, in which the slot comprises a feature in a surface of an artefact, formed by electrical discharge machining.

10. A method as claimed in any preceding claim, in which the probe comprises an analogue probe, for example a passive analogue probe.

11. A method as claimed in any preceding claim, in which the positioning apparatus comprises a coordinate positioning machine, for example a coordinate measuring machine.

12. A method of determining the position of the edge of a slot, comprising fitting to measurement data comprising the position of a stylus tip of a contact probe during its transition between being on the surface of the artefact adjacent the slot and against the edges of the mouth of the slot, an arc of given radius defined by the stylus tip radius.

13. A method as claimed in claim 12, in which the length and orientation of the arc is determined from said measurement data.

14. A method as claimed in claim 12 or 13, in which said measurement data additionally comprises the position of the stylus tip taken at different points along a portion of the surface adjacent the slot, and in which the method comprising fitting to said measurement data a shape comprising said arc and a portion that is tangential to said arc at least at their interface.

15. A method as claimed in any of claims 12 to 14, comprising determining the position of the edge of the closed end of a slot.

Fig. 1

Fig. 2

Fig. 3a

Fig. 3b

100

```
          ┌─────────────┐
          │    Start    │
          └──────┬──────┘
                 │
                 ▼
        ┌──────────────────┐
        │ Scan across the  │
   102  │ slot at at least │
        │  two positions   │
        │  along its length│
        └────────┬─────────┘
                 │
                 ▼
        ┌──────────────────┐
        │  Determine X (and│
   104  │ optionally Z)    │
        │  position of slot│
        └────────┬─────────┘
                 │
                 ▼
        ┌──────────────────┐
   106  │ Position stylus  │
        │   tip in slot    │
        └────────┬─────────┘
                 │
                 ▼
        ┌──────────────────┐
        │ Scan along slot  │
        │ with stylus tip  │
   108  │ in contact with  │
        │ the edges that   │
        │ define the mouth │
        │   of the slot    │
        └────────┬─────────┘
                 │
                 ▼
        ┌──────────────────┐
        │ Determine width  │
   110  │ of the slot along│
        │ the length of    │
        │   the scan       │
        └────────┬─────────┘
                 │
                 ▼
          ┌─────────────┐
          │     End     │
          └─────────────┘
```

Fig. 4

Fig. 5

Fig. 6

Fig. 7

Fig. 8a

Fig. 8b

Fig. 8c

EP 3 128 287 A1

Fig. 9

21

Europäisches
Patentamt

European
Patent Office

Office européen
des brevets

# EUROPEAN SEARCH REPORT

**Application Number**

EP 15 30 6273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 460 261 B1 (NODA TAKASHI [JP] ET AL) 8 October 2002 (2002-10-08) * column 7, line 56 - column 8, line 22; claim 1; figures 15-18 * | 1-15 | INV. G01B5/008 G01B5/04 |
| A | US 2004/107073 A1 (SAKURADA JUNJI [JP] ET AL) 3 June 2004 (2004-06-03) * paragraphs [0213] - [0218]; figure 4A * * paragraphs [0225] - [0230], [0242] - [0247], [0254] - [0259]; figure 10B * | 1-15 | |
| A | CN 103 712 583 A (NINGBO KONFOONG MATERIALS INT) 9 April 2014 (2014-04-09) * abstract; figure 5 * | 1-15 | |
| A | JP 2000 028353 A (HOYA CORP) 28 January 2000 (2000-01-28) * paragraphs [0079] - [0083]; figure 11 * * abstract * | 1-15 | |

**TECHNICAL FIELDS SEARCHED (IPC)**

G01B

The present search report has been drawn up for all claims

| Place of search | Date of completion of the search | Examiner |
|---|---|---|
| Munich | 20 January 2016 | Trique, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6273

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2016

| Patent document cited in search report | | Publication date | Patent family member(s) | | Publication date |
|---|---|---|---|---|---|
| US 6460261 | B1 | 08-10-2002 | DE | 60021837 D1 | 15-09-2005 |
| | | | DE | 60021837 T2 | 24-05-2006 |
| | | | EP | 1103781 A1 | 30-05-2001 |
| | | | US | 6460261 B1 | 08-10-2002 |
| US 2004107073 | A1 | 03-06-2004 | EP | 1422491 A2 | 26-05-2004 |
| | | | US | 2004107073 A1 | 03-06-2004 |
| CN 103712583 | A | 09-04-2014 | NONE | | |
| JP 2000028353 | A | 28-01-2000 | JP | 3154699 B2 | 09-04-2001 |
| | | | JP | 2000028353 A | 28-01-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007129071 A

- WO 2007129075 A